# EUROPÄISCHE PATENTANMELDUNG

(11) **EP 0 773 381 A2**
(43) Veröffentlichungstag der Anmeldung: **14.05.1997**
(21) Anmeldenummer: 96116843.2
(22) Anmeldetag: 19.10.1996
(51) Int. Cl.: F16D 3/77, F16D 3/06

(54) **Kupplungsfederelement**

(30) Priorität: 11.11.1995 DE 19542072
(71) Anmelder: TRW Fahrwerksysteme GmbH & Co. KG, 40547 Düsseldorf (DE)
(72) Erfinder: Dorr, Christoph, 40667 Meerbusch (DE)
(74) Vertreter: Stenger, Watzke & Ring Patentanwälte

(57) **Zusammenfassung**

Mit der Erfindung wird ein Kupplungsfederelement bereitgestellt, welches eine zugangsfreie und spielfreie Montage und eine drehsteife Wellenumdrehungsübertragung ermöglicht und axial große federelastische Eigenschaften aufweist, wozu ein plattenförmiges Element mit einem im wesentlichen zentrischen Verbindungsbereich zum Anschluß an eine Welle und einem am äußeren Umfangsbereich gebildeten Verbindungsbereich zum Anschluß an eine weitere Welle versehen ist und zwischen beiden Verbindungsbereichen schlitzartige Ausnehmungen aufweist.

## Beschreibung

Die Erfindung betrifft ein Kupplungsfederelement mit axialelastischen Eigenschaften zur drehsteifen Verbindung von Wellen.

Kupplungsfederelemente mit axialelastischen Eigenschaften zur Verbindung von Wellen werden überall dort benötigt, wo Wellenumdrehungen möglichst spielfrei und drehsteif übertragen werden müssen, aber zumindest in geringen Maßen Axialelastizität gefordert ist.

Derartige Fälle liegen zum Beispiel vor, wenn ein Montageraum für eine Wellenkupplung eng ist. Die Kupplung sollte axialelastisch zusammengepreßt einbringbar und nach Entlastung drehsteif und spielfrei mit beiden Wellen verbindbar sein. Derartige Kupplungselemente sind aus dem Stand der Technik nicht bekannt.

Ein anderer denkbarer Fall ist zum Beispiel die drehsteife aber axialelastische Anbringung von Sensoren für Wellenpositionierungen. Derartige Sensoren weisen eine Welle mit Elementen auf, die gegenüber drehfesten Gegenelementen variabel sind. Bisher erfolgt die Anbindung derartiger Sensoren derart, daß zwischen der Zentralwelle des Sensors und der zu überwachenden Welle eine Blechplatte angeordnet ist, die konzentrisch zur Plattenmitte halbkreisförmige Ausnehmungen aufweist. Im Zentrum ist eine Schraub- oder Nietenverbindung für die Verbindung mit einer der Wellen vorgesehen, am Plattenrand gegenüberliegend entsprechende Verbindungen für die jeweils andere Welle. Der Zentralbereich und der Randbereich sind jeweils gegensinnig hinsichtlich der Plattenebene aufgebogen. Derartige Blechplattenverbindungen stellen weder Axialfederwirkung bereit noch sind sie drehsteif.

Ein weiterer bemerkenswerter Nachteil vorbekannter Systeme ist der erforderliche Zugang bei der Montage. Dieses Problem ist da gegeben, wo die Montage zugangsfrei sein muß, beispielsweise wenn entsprechend versehene Systeme kosten- und montagegünstig abgedichtet werden müssen. In diesem Falle ist es wünschenswert, nach der Vormontage die Teile miteinander befestigen zu können, ohne daR ein weiterer Zugang in den Montagebereich erforderlich ist.

Es besteht im Bereich der einschlägigen Technologien grundsätzlich ein Bedarf an Kupplungsfederelementen, die bei geringem Bauraumbedarf möglichst frei montierbar sind, Wellenumdrehungen möglichst spielfrei und drehsteif übertragen können und axialelastische Eigenschaften aufweisen.

Der Erfindung liegt somit die **Aufgabe** zugrunde, ein derartiges Kupplungsfederelement bereitzustellen und damit Anwendungsbereiche zu erschließen, die eine erfinderische Erweiterung durch das Kupplungsfederelement erfahren.

Zur technischen **Lösung** wird als Kupplungsfederelement ein plattenförmiges Element bereitgestellt, mit einem im wesentlichen zentrischen Verbindungsbereich zum Anschluß an eine Welle und einem am äußeren Umfangsbereich gebildeten Verbindungsbereich zum Anschluß an eine weitere Welle, wobei zwischen beiden Verbindungsbereichen schlitzartige Ausnehmungen ausgebildet sind.

Die Verbindungsbereiche des erfindungsgemäßen Kupplungsfederelementes sind direkt zum Anschluß an eine Welle ausgebildet und können mit komplementären Ausbildungen im Stirnkantenbereich der jeweiligen Welle zusammenwirken. Somit ist eine zugangsfreie Montage möglich, wobei zugleich auch eine völlige Spielfreiheit gewährleistet werden kann. Darüber hinaus werden durch nur schlitzartige Ausnehmungen ein hoher Grad an Drehsteifigkeit erzielt und die jeweils gewünschten axialelastischen Federeigenschaften bereitgestellt.

Gemäß einem vorteilhaften Vorschlag der Erfindung können die Verbindungsbereiche gezahnt oder als Mehrkantbereiche ausgebildet sein. Insbesondere bieten sich Dreikant- bzw. Sechskantkombinationen an, wobei der zentrale Verbindungsbereich und der äußere Verbindungsbereich konzentrisch zueinander angeordnet sind. Die Verbindungsbereiche sind in vorteilhafter Weise in axialer Richtung mit einem Rand versehen, bilden also Rohrstücke mit entsprechenden Querschnitten, wobei diese axialen Ränder des zentralen Verbindungsbereiches und des äußeren Verbindungsbereiches gemäß einem Vorschlag der Erfindung in einer jeweils entgegengesetzten axialen Richtung ausgebildet sind. Schließlich wird gemäß einem Vorschlag der Erfindung wenigstens einer der rohrstückartigen Verbindungsbereiche konisch ausgebildet.

Durch die erfindungsgemäße Ausbildung der Verbindungsbereiche wird einerseits eine zugangsfreie Montage ermöglicht, andererseits eine spielfreie Verbindung zwischen den Wellen.

Die schlitzartigen Ausnehmungen sind zwischen den beiden Verbindungsbereichen derart ausgebildet, daß diese ein Federsystem bilden. In vorteilhafter Weise sind die schlitzartigen Ausnehmungen in zu dem zentralen Verbindungsbereich konzentrischen Kreisbahnebenen angeordnet. So wird mit der Erfindung eine erfindungswesentliche Ausgestaltung gekennzeichnet, wobei in einer ersten Kreisbahnebene um den zentralen Verbindungsbereich schlitzartige Ausnehmungen mit einer W-Form angeordnet sind, wobei die Basis des jeweiligen W's zum zentrischen Verbindungsbereich liegend angeordnet ist. Weiterhin ist in vorteilhafter Weise eine weitere Kreisbahnebene, die weiter außen als die erstgenannte liegt, mit im wesentlichen U-förmigen Schlitzen versehen, deren Basis zum äußeren Verbindungsbereich weist. Die Schenkel der U-förmigen Schlitze übergreifen die Schenkel der W-förmigen Schlitze. Mit der Erfindung ist somit ein konkretes Federsystem definiert, welches durch die definierte Anordnung von Schlitzen mit einer definierten Konfiguration gebildet wird. Durch die jeweilige Variation der Lage und der Schlitzdicke bzw. der Breite bestimmter Schlitzbereiche lassen sich die Federcharakteristika variieren, ohne daR die Drehsteifigkeit des Kupplungsfederelementes wesentlich beeinträchtigt wird.

In vorteilhafter Weise erfolgt die Verbindung des Verbindungsbereiches am äußeren Umfang des Kupplungsfederelementes mit einer Welle, die stirnseitig eine Senke ausgebildet hat. Durch diese Maßnahme kann die axiale Federelastizität des Kupplungsfederelementes auch in Richtung dieser Welle ausgenutzt werden.

Weiterhin wird in vorteilhafter Weise der zentrale Verbindungsbereich mit einer Welle verbunden, die stirnseitig eine Kuppelform aufweist, so daß auch in dieser Richtung axialelastische Eigenschaften nutzbar gemacht werden können.

Das erfindungsgemäße Kupplungsfederelement kann zur Verbindung einer Welle mit einem Wellenpositionssensor verwendet werden, wobei insbesondere sämtliche Fehlerquellen aufgrund von Spiel oder mangelnder Drehsteifigkeit vermeidbar sind. In besonders vorteilhafter Weise kann die Ausgangswelle eines Servolenkventiles mit der Welle eines Wellenpositionssensors mit dem erfindungsgemäßen Kupplungsfederelement verbunden sein.

Das erfindungsgemäße Kupplungsfederelement ist in vorteilhafter Weise aus Blech gefertigt, mit besonderem Vorteil als Stanzte und Tiefziehteil.

Das erfindungsgemäße Kupplungsfederelement zeichnet sich durch einen sehr einfachen und preiswerten Aufbau aus, so daß es in großer Stückzahl in einfacher Weise als Stanz- und Tiefziehteil herstellbar ist. Es kann platzsparend auch in engsten Montagebereichen und zugangsfrei montiert werden. Dabei erfolgt die Anbindung spielfrei durch konische Mehrkantbereiche, die rohrstückartig oder glockenförmig ausgebildet sind, wobei die axiale Federkraft das Kupplungsfederelement in seiner Arbeitslage auch über eine lange Gebrauchsdauer ohne zusätzliche Befestigungsmittel spielfrei positioniert. Dreikantbereiche zeichnen sich, z. B. gegenüber Sechskantbereichen, dadurch aus, daß sie mechanisch nicht überbestimmt sind.

Eine spezielle Schlitzung vervielfacht die Federlänge und gleicht radiale Verschiebungen aus. Hierdurch erhält man bei begrenzter radialer Abmessung sehr große Federwege und eine weiche Federkennlinie. Das erfindungsgemäße Kupplungsfederelement stellt darüber hinaus eine geschlossene torsionssteife Kontur bereit, die im Betrieb beim Einfedern keine Relativbewegungen zu den Auflageflächen aufweist. Die erfindungsgemäße Schlitzung unterstützt einerseits die Federeigenschaften in Axialrichtung, andererseits auch die verhältnismäßig hohe Drehsteifigkeit.

In bestimmten Anwendungsfällen kann es wünschenswert sein, einen sogenannten Froscheffekt zu nutzen, um bei Auslenkung aus einer Mittellage in beiden Richtungen in einem begrenzten Bereich eine symmetrische Federkennlinie zu erhalten.

Die Einsatzmöglichkeiten des erfindungsgemäßen Kupplungsfederelementes sind vielfältig. Einerseits kann eine Montage ohne zusätzliche Befestigungselemente erfolgen, beispielsweise bei engen Montageräumen durch Ausnutzung des Axialfedereffektes. Es können dynamische axiale Wellenabstandsänderungen und ein radialer sowie Winkelversatz aufgenommen bzw. ausgeglichen werden. Darüber hinaus ist eine zugangsfreie Montage, also eine selbsttätige Montage durch Einschnappen möglich, wobei insbesondere die Spielfreiheit auch über längere Betriebszeit durch selbständige Nachstellwirkungen gewährt ist.

Ist der beschriebene Froscheffekt nicht erwünscht, läßt er sich beispielsweise durch Einbringen einer Wellung vermeiden. Dadurch kann auch die Federsteifigkeit erniedrigt bzw. überhaupt beeinflußt und die Werkstoffbelastung verringert werden. Die Dauerhaftigkeit bzw. die Standzeit für das Kupplungsfederelement werden dadurch erheblich verbessert.

Als besonders erfindungswesentlich wird der Einsatzbereich des Kupplungsfederelementes im Bereich von Servolenkventilen angegeben, wo beispielsweise eine Ausgangswelle mit dem erfindungsgemäßen Kupplungsfederelement mit einem Wellenpositionssensor verbunden sein kann. Es lassen sich somit beispielsweise Informationen über die Wellenumdrehungen ermitteln. Diese Anwendung erfordert neben den bereits erläuterten Eigenschaften des Kupplungsfederelementes außerdem eine axiale Federkraft, die auf die Sensorwelle wirkt und vom Kupplungsfederelement zur Verfügung gestellt wird.

Weitere Vorteile und Merkmale der Erfindung ergeben sich aus der folgenden Beschreibung anhand der Figuren. Dabei zeigen:
- Figur 1: die Draufsicht auf ein Ausführungsbeispiel für ein Kupplungsfederelement;
- Figur 2: einen Schnitt durch das Federelement gemäß Figur 1 in einem Fertigungszwischenschritt;
- Figur 3: einen Schnitt durch das fertige Federelement gemäß Figur 1;
- Figur 4: ein alternatives Ausführungsbeispiel für ein Kupplungsfederelement;
- Figur 5: einen der Figur 2 entsprechenden Schnitt durch ein alternatives Kupplungsfederelement und
- Figur 6: eine schematische Darstellung eines Anwendungsbeispiels eines Kupplungsfederelementes.

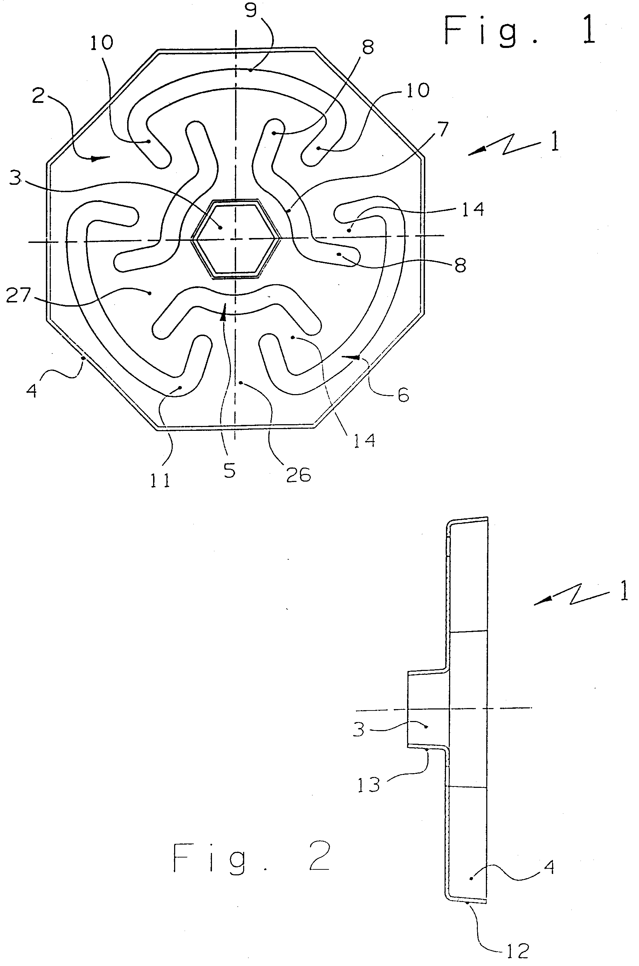

Bei dem in den Figuren 1 bis 3 gezeigten ersten Ausführungsbeispiel ist das Kupplungsfederelement 1 aus einer Platte 2, vorzugsweise als Stanzteil aus einer Blechplatte, gebildet. Die Blechplatte 2 hat einen inneren bzw. zentrischen Verbindungsbereich 3 und einen äußeren Verbindungsbereich 4, der im Tiefziehverfahren aus der ebenen Blechplatte gezogen werden kann. Im gezeigten Ausführungsbeispiel ist der zentrische Verbindungsbereich als Innensechskant und der äußere Verbindungsbereich als Außenachtkant ausgebildet. In einer ersten inneren Kreisbahnebene sind W-förmige Schlitze 5 ausgebildet, in einer zweiten, äußeren Kreisbahnebene U-förmige Schlitze 6. Die jeweilige Basis 7 der W-förmigen Schlitze 5 weist zum zentrischen Verbindungsbereich, so daß die Schenke 8 des W-förmigen Schlitzes nach außen zum äußeren Verbindungsbereich weisen.

Die Basis 9 eines jeden U-förmigen Schenkels weist demgegenüber zum äußeren Verbindungsbereich, während die Schenke 10 der U-förmigen Schlitze 6 zum zentrischen Verbindungsbereich weisen. Die U-förmigen Schlitze übergreifen die Schenkel der W-förmigen Schlitze. Es sind somit zwischen den Schenkeln 8 und 10 die Stege 14, zwischen den Schenkeln 8 zweier benachbarter, w-förmiger Schlitze 5 die Stege 27 und zwischen den Schenkeln 10 zweier benachbarter, u-förmiger Schlitze 6 die Stege 26 gebildet, die ausreichend stark sind, um eine Drehsteifigkeit zu gewährleisten.

Die Federcharakteristik wird durch die Anzahl und die Form der Schlitze beeinflußt. Die Form kann beispielsweise hinsichtlich der Radien 11 variiert werden, durch die Schlitzbreite, durch die Schenkellänge und dergleichen.

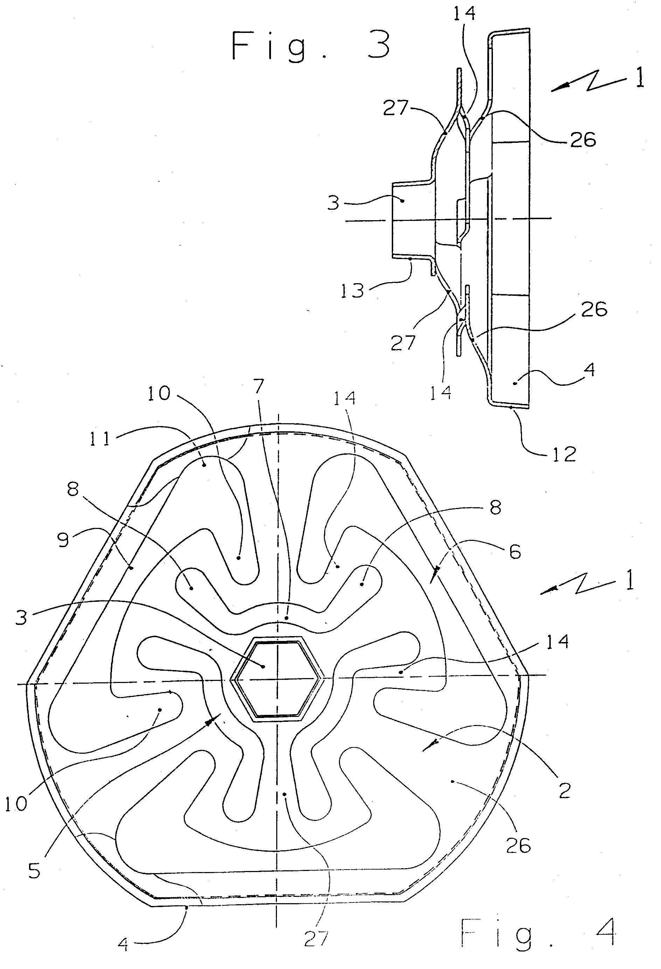

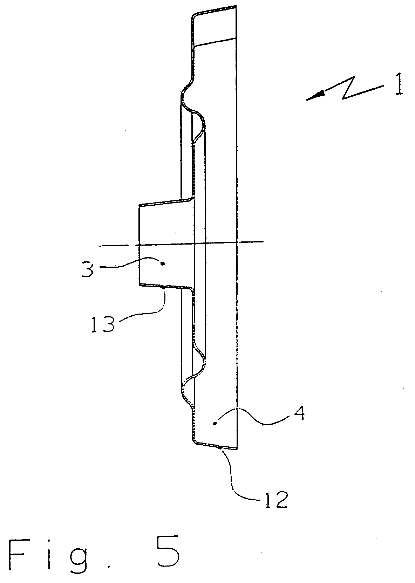

In der Figur 2 ist eine Seitenansicht des Federelementes in einem Fertigungszwischenschritt gezeigt, und zwar in einer Position, in der die Schlitze eingestanzt wurden, das Federelement jedoch noch nicht in die in Figur 3 gezeigte axiale Form gereckt und gehärtet wurde.

Wie insbesondere in den Figuren 2 und 3 gezeigt ist, sind der zentrische Verbindungsbereich 3 und der äußere Verbindungsbereich 4 rohrstückartig mit einem sich axialerstreckenden Rand 12 bzw. 13 versehen. Die Ränder sind konisch ausgebildet, um im Rahmen von formschlüssigen Preßpassungen mit jeweiligen Gegenstücken spielfrei verbindbar zu sein. Insbesondere beim einbaufertigen Bauteil in der gereckten Position gemäß Figur 3 ist die Funktion der Stege 14, 26, 27 gut zu erkennen. Einerseits werden die Federcharakteristika durch die Schlitze und Stege definiert, andererseits die Drehsteifigkeit beeinflußt.

Bei dem in Figur 4 gezeigten Ausführungsbeispiel sind die Kontur der W- und U-förmigen Schlitze sowie der äußere Umfang und Verbindungsbereich variiert. Hierdurch werden einerseits andere Federcharakteristika erzielt. Andererseits wir die Spielfreiheit und die zugangslose Montagemöglichkeit durch die geänderte Außenkontur verbessert. Durch die Variation des Verbindungsbereiches vom Achtkant bzw. Sechskant zum Dreikant wird bei gleichem radialen Bauraum die nutzbare Federlänge vergrößert. Außerdem ist im Betrieb bei einer Einfederung eine Verformung des sich axial erstreckenden Randes 12 ohne Einfluß auf die Spielfreiheit der Drehübertragung. Im übrigen sind gleiche Elemente mit gleichen Bezugszeichen versehen.

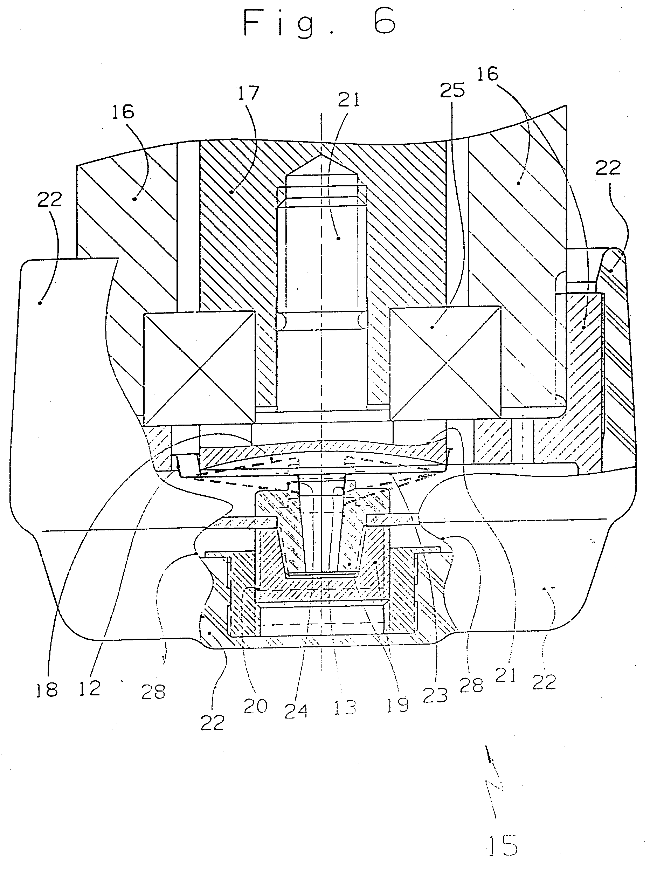

Figur 5 zeigt eine Ausführungsvariante mit einer Wellung im Fertigungsschritt vor der axialen Reckung. Diese Wellung erhöht die axiale Elastizität und verringert bzw. vermeidet einen sogenannten Froscheffekt. Als Froscheffekt wird hier eine Federkennlinie bezeichnet, die einen wellenförmigen Verlauf mit lokalem Maximum und Minimum aufweist. Dieser Verlauf einer Federkennlinie ist für bestimmte Anwendungen wünschenswert, da bei statischer Vorspannung im Bereich des lokalen Minimums bzw. Maximums bei kleinen Federwegen in beiden Richtungen ein symmetrischer Federkennlinienverlauf vorliegt. Der genaue Verlauf einer Federkennlinie kann durch die Variation der U- und W-förmigen Schlitze den Erfordernissen angepaßt werden.

In Figur 6 ist ein Anwendungsbereich gezeigt. Hier ist der Einsatz eines Kupplungsfederelementes, in Figur 6 mit 23 bezeichnet, in einem Servolenkventil 15 gezeigt. Das am Servoventilgehäuse 16 befestigte Sensorgehäuse 22 ist dazu bereichsweise entlang der Schnittlinie 28 aufgeschnitten. Das Servolenkventil 15 weist ein Gehäuse 16 auf. In dem Gehäuse, von dem das eine Ende gezeigt ist, ist eine Ausgangswelle 17 angeordnet, die, im gezeigten Ausführungsbeispiel, in eine Lager-Dichtungs-Einheit 25 eingesetzt ist. Das stirnseitige Ende der Ausgangswelle 17 ist mit einer Schraube 21 versehen, die eine Senke 18 aufweist. Die Schraube 21 hat im Bereich ihres stirnseitigen Endes einen Sechskantquerschnitt, der der Kontur des äußeren Verbindungsbereiches 12 eines Kupplungsfederelementes 23 entspricht. Durch die konische Ausbildung des Verbindungsbereiches 12 und die Federwirkung rastet das Kupplungsfederelement zugangsfrei und spielfrei bei der Montage des Sensorgehäuses 22 auf das Gehäuse 16 in die Montagelage auf dem stirnseitigen Ende der Schraube 21 ein.

Im gezeigten Ausführungsbeispiel soll an das stirnseitige Ende der Ausgangswelle 17 ein Wellenpositionssensor 19 angeschlossen werden. Dieser Wellenpositionssenor 19 ist einerseits mit einer Gewindespindel versehen, so daß Wellenumdrehungen einer Axialbewegung des Sensors 19 bewirken. Da ein elektrischer Kontakt gewünscht ist, der auch über das Gewinde läuft, muß eine gewisse axiale Kraft ausgeübt werden, um das Gewinde 20 ständig in elektrisch leitendem sicheren Kontakt zu halten. Diese axiale Kraft wird aufgrund der Axialelastizität des Kupplungsfederelementes 23 bereitgestellt. Dieses Kupplungsfederelement 23 ist in verschiedenen Positionen gezeigt. So ist es beispielsweise in gestrichelter Form in die Stirnsenke 18 eingedrückt gezeigt, wobei es selbstverständlich gleichzeitig die stirnseitige Kuppel 24 des Positionssensors 19 überdeckt.

Der zentrische Anschlußbereich in Form des zentrischen axialen Randes 13 ist ebenfalls als Mehrkant ausgebildet und in eine stirnseitige Öffnung mit kongruenten Querschnitt eingesetzt. Aufgrund der Konizität des axialen Randes 13 erfolgt hier eine spielfreie einfache Montage, durch Einpressen in die Öffnung des Positionssensors 19 vor der Endmontage des mit allen Einzelteilen komplettierten Sensorgehäuses 22 durch eine Schnappverbindung auf dem Servoventilgehäuse 16.

Es zeigt sich in dem Ausführungsbeispiel gemäß Figur 6, daß eine einfache Vormontage der Elemente genügt, so daß beim Zusammenpressen der Baugruppen ohne einen weiteren Zugang eine definierte Positionierung erfolgt. Auch ein gewisser axialer, radialer und Winkel-Versatz kann durch das Kupplungsfederelement ausgeglichen werden. Darüber hinaus kann das Kupplungsfederelement 23 die Drehbewegungen der Ausgangswelle 17 spielfrei und drehsteif übertragen und dennoch die erforderliche Axialelastizität zur Verwendung eines wie gezeigten Positionssensors 19 zulassen.

Die vorliegende Erfindung ist nicht auf die beschriebenen Ausführungsbeispiele von Kupplungsfederelement oder den beschriebenen Anwendungsfall beschränkt, obwohl erfindungswesentliche Merkmale sowohl hinsichtlich der Ausgestaltung als auch des konkreten in Figur 6 gezeigten Anwendungsfalles offenbart sind.

### Bezugszeichenliste:

- 1: Kupplungsfederelement
- 2: Platte
- 3: zentrischer Verbindungsbereich
- 4: äußerer Verbindungsbereich
- 5: W-Schlitz
- 6: U-Schlitz
- 7: W-Basis
- 8: W-Schenkel
- 9: U-Basis
- 10: U-Schenkel
- 11: Radius
- 12: axialer Rand
- 13: axialer Rand
- 14: Steg
- 15: Servolenkventil
- 16: Gehäuse
- 17: Ausgangswelle
- 18: Stirnsenke
- 19: Positionssensor
- 20: Gewindespindel
- 21: Schraube
- 22: Sensorgehäuse
- 23: Kupplungsfederelement
- 24: Stirnkuppel
- 25: Lager-Dichtungs-Einheit
- 26: Steg
- 27: Steg
- 28: Schnittlinie

## Patentansprüche

1. Kupplungsfederelement mit axialelastischen Eigenschaften zur drehsteifen Verbindung von Wellen,
**dadurch gekennzeichnet,**
daß ein plattenförmiges Element mit einem im wesentlichen zentrischen Verbindungsbereich zum Anschluß an eine Welle und einem am äußeren Umfangsbereich gebildeten Verbindungsbereich zum Anschluß an eine weitere Welle versehen ist und zwischen beiden Verbindungsbereichen schlitzartige Ausnehmungen aufweist.

2. Kupplungsfederelement nach Anspruch 1, dadurch gekennzeichnet, daß wenigstens einer der Verbindungsbereiche gezahnt ist.

3. Kupplungsfederelement nach einem der vorhergehenden Ansprüche, dadurch gekennzeichnet, daß wenigstens einer der Verbindungsbereiche als Mehrkant ausgebildet ist.

4. Kupplungsfederelement nach Anspruch 3, dadurch gekennzeichnet, daß der Mehrkant ein Dreikant ist.

5. Kupplungsfederelement nach Anspruch 4, dadurch gekennzeichnet, daß die Spitzen des Dreikants durch Kreissegmente geschnitten sind, deren Mittelpunkt vorzugsweise mit dem Zentrum des Dreikants zusammenfällt.

6. Kupplungsfederelement nach Anspruch 5, dadurch gekennzeichnet, daß ausgehend vom Bereich der Kreissegmente zwischen schlitzartigen Ausnehmungen liegende Federstege ausgebildet sind.

7. Kupplungsfederelement nach Anspruch 3, dadurch gekennzeichnet, daß der wenigstens eine Mehrkant ein Sechskant ist.

8. Kupplungsfederelement nach einem der vorhergehenden Ansprüche, dadurch gekennzeichnet, daß der zentrale und der äußere Verbindungsbereich zueinander konzentrisch ausgebildet sind.

9. Kupplungsfederelement nach einem der vorhergehenden Ansprüche, dadurch gekennzeichnet, daß wenigstens einer der Verbindungsbereiche mit einem sich in axialer Richtung erstreckenden Rand ausgebildet ist.

10. Kupplungsfederelement nach Anspruch 9, dadurch gekennzeichnet, daß, wenn beide Verbindungsbereiche mit axialerstreckendem Rand ausgebildet sind, beide Ränder in einer entgegengesetzten axialen Richtung verlaufend ausgebildet sind.

11. Kupplungsfederelement nach einem der Ansprüche 9 oder 10, dadurch gekennzeichnet, daß der axiale Rand konisch ausgebildet ist.

12. Kupplungsfederelement nach einem der vorhergehenden Ansprüche, dadurch gekennzeichnet, daß durch die schlitzartigen Ausnehmungen zwischen beiden Verbindungsbereichen ein Federsystem gebildet ist.

13. Kupplungsfederelement nach Anspruch 12, dadurch gekennzeichnet, daß die schlitzartigen Ausnehmungen in zum zentrischen Verbindungsbereich konzentrischen Kreisbahnebenen angeordnet sind.

14. Kupplungsfederelement nach Anspruch 13, dadurch gekennzeichnet, daß in einer Kreisbahnebene auf dem Umfange gleichmäßig verteilt mehrere W-förmige Schlitze angeordnet sind, deren Basis zum zentralen Verbindungsbereich weist.

15. Kupplungsfederelement nach Anspruch 13 oder 14, dadurch gekennzeichnet, daß in einer Kreisbahn auf dem Umfang gleichmäßig verteilt mehrere U-förmige Schlitz ausgebildet sind, deren Basis zum am Umfangsbereich ausgebildeten Verbindungsbereich weist.

16. Kupplungsfederelement nach Anspruch 14 und 15, dadurch gekennzeichnet, daß die Schenkel der U-förmigen Schlitze die Schenkel der W-förmigen Schlitze übergreifen.

17. Kupplungsfederelement nach einem der vorhergehenden Ansprüche, dadurch gekennzeichnet, daß dieses mit dem äußeren Verbindungsbereich am stirnseitigen Ende einer Welle angeordnet ist, in welchem eine Senke ausgebildet ist.

18. Kupplungsfederelement nach einem der vorhergehenden Ansprüche, dadurch gekennzeichnet, daß dieses mit dem zentralen Verbindungsbereich am stirnseitigen Ende einer Welle angeordnet ist, welches kuppelförmig ausgebildet ist.

19. Kupplungsfederelement nach einem der vorhergehenden Ansprüche, dadurch gekennzeichnet, daß dieses zur Verbindung einer Welle mit einem Wellenpositionssensor eingesetzt ist.

20. Kupplungsfederelement nach einem der vorhergehenden Ansprüche, dadurch gekennzeichnet, daß dieses zur Verbindung einer Ausgangswelle eines Servolenkventils mit der Welle eines Wellenpositionssensors eingesetzt ist.

21. Kupplungsfederelement nach einem der vorhergehenden Ansprüche, dadurch gekennzeichnet, daß dieses aus Blech, vorzugsweise aus Federstahlblech, gebildet ist.

22. Kupplungsfederelement nach einem der vorhergehenden Ansprüche, dadurch gekennzeichnet, daß dieses ein Stanz- und Tiefziehteil ist.

23. Kupplungsfederelement nach einem der vorhergehenden Ansprüche, dadurch gekennzeichnet, daß dieses nach dem Tiefzieh- und Stanzprozeß auf seine Arbeitshöhe gereckt und anschließend gehärtet ist.

24. Kupplungsfederelement nach einem der vorhergehenden Ansprüche, dadurch gekennzeichnet, daß dieses im Bereich der Stege zwischen den u- bzw. w-förmigen Schlitzen eine sich radial ausbreitende, ringförmige, zum Mehrkant konzentrische Wellung aufweist, deren Amplitude sich in axialer Richtung erstreckt.
